(19) Europäisches Patentamt
European Patent Office
Office européen des brevets

(11) **EP 3 614 862 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **18720098.5**

(22) Anmeldetag: **12.04.2018**

(51) Int Cl.:
*A23L 3/16* (2006.01)    *A23C 3/033* (2006.01)
*A23L 3/22* (2006.01)    *A23B 4/005* (2006.01)
*A23L 19/00* (2016.01)

(86) Internationale Anmeldenummer:
**PCT/EP2018/000199**

(87) Internationale Veröffentlichungsnummer:
**WO 2018/197037 (01.11.2018 Gazette 2018/44)**

(54) **VERFAHREN UND UHT-ANLAGE ZUR BEHANDLUNG EINES STÜCKIGE BEIMENGUNGEN BEINHALTENDEN PRODUKTS UNTER ASEPTISCHEN BEDINGUNGEN**

PROCESS AND UHT INSTALLATION FOR TREATING A PRODUCT CONTAINING ADDITIONAL INGREDIENTS IN PIECE FORM UNDER ASEPTIC CONDITIONS

PROCÉDÉ ET INSTALLATION UHT PRÉVUE POUR TRAITER UN PRODUIT CONTENANT DES ADDITIONS EN MORCEAUX DANS DES CONDITIONS ASEPTIQUES.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2017 DE 102017004197**

(43) Veröffentlichungstag der Anmeldung:
**04.03.2020 Patentblatt 2020/10**

(73) Patentinhaber: **GEA TDS GmbH**
**31157 Sarstedt (DE)**

(72) Erfinder:
• **SCHWENZOW, Uwe**
**48683 Ahaus (DE)**
• **BUSSMANN, Guido**
**48653 Coesfeld (DE)**
• **ROLLE, Ulrich**
**48351 Everswinkel (DE)**
• **TACKE, Ludger**
**46342 Velen (DE)**
• **SCHLÖSSER, Wolfgang**
**48683 Ahaus (DE)**

(74) Vertreter: **Hauck Patentanwaltspartnerschaft mbB**
**Postfach 11 31 53**
**20431 Hamburg (DE)**

(56) Entgegenhaltungen:
**EP-A2- 2 757 342    US-A- 4 543 263**
**US-A- 4 830 865**

**Beschreibung**

TECHNISCHES GEBIET

Die Erfindung betrifft ein Verfahren und eine UHT-Anlage zur Behandlung eines stückige Beimengungen wie beispielsweise Fruchtstücke, stückiges Fruchtfleisch, mit Fruchtflüssigkeit gefüllte faserige oder papillenartige Gebilde oder allgemein gegen mechanische und/oder strömungsmechanische Beanspruchungen wenig widerstandsfähige Partikel beinhaltenden Produkts oder eines aus einer Trägerflüssigkeit und solchen stückigen Beimengungen bestehenden Mischprodukts unter aseptischen Bedingungen, bei dem das Produkt oder Mischprodukt vorzugsweise unter sterilen Bedingungen an einem ersten Ort her- und/oder bereitgestellt und an einem zweiten Ort kalt abgefüllt wird, bei dem das Produkt oder Mischprodukt vorzugsweise unter aseptischen Bedingungen vom ersten zum zweiten Ort zwangsweise gefördert wird und dabei wenigstens eine Erhitzung, eine Heißhaltung und eine Kühlung erfährt und bei dem ein den ersten und den zweiten Ort fluidgängig verbindender Strömungsweg vorgesehen ist.

Unter stückigen Beimengungen sollen insbesondere solche Beimengungen verstanden werden, die bei herkömmlichen Behandlungsprozessen, die durch Hitze- und/oder mechanische Einwirkungen wie Scherbeanspruchungen gekennzeichnet sind, in ihrer Struktur nicht unversehrt bleiben oder gar zerstört werden. Der Begriff umfasst insbesondere festkörperartige, kleinstückige Beimengungen wie Früchte, Fruchtstücke, Nüsse oder Samen. Unter kleinstückig soll eine Beimengung quantifiziert werden, die mit einer Mindestgröße beim Verzehr, insbesondere beim Trinken, noch wahrnehmbar ist (beispielsweise Samen oder ähnliches mit einem größten Partikeldurchmesser von 1 bis 2 mm) oder die mit einer maximalen Partikelabmessung von nicht mehr als 5 mm noch trinkbar ist, insbesondere mit einem Stroh- oder Trinkhalm. Es sollen aber auch sensible stückige Beimengungen umfasst sein, die größere Abmessungen als die vorgenannten aufweisen und die, wenn sie weitestgehend unversehrt bis zur Kaltabfüllung in Behältnisse bleiben sollen, einer besonders schonenden Behandlung bedürfen.

Der vorliegende Anmeldungsgegenstand behandelt insbesondere einen Prozessabschnitt einer UHT-Anlage, an dessen Ende die Befüllung eines Behältnisses steht, das in einem ersten Schritt aus einer Teilbefüllung mit einem aus einer Trägerflüssigkeit und stückigen Beimengungen bestehenden Mischprodukt und in einem zweiten Schritt mit dem Auffüllen des zunächst teilbefüllten Behältnisses mit einer weiteren Flüssigkeit besteht. Der Anmeldungsgegenstand soll im weitesten Sinne die Behandlung eines Produkts in einer UHT-Anlage umfassen, das im Wesentlichen aus stückigen Beimengungen besteht, unabhängig davon, ob diese stückigen Beimengungen für sich gesehen allein oder eingerührt in eine Trägerflüssigkeit förderbar sind. Im Folgenden wird in allen Fällen von einem Mischprodukt gesprochen.

STAND DER TECHNIK

Durch den Anmelder wurde ab 2006, insbesondere durch Lieferungen von UHT-Anlagen nach China, ein Stand der Technik geschaffen, der als "Fruit UHT & Dosing 4000 l/h" bezeichnet wird. Eine erste Komponente, "Milk base", und eine zweite Komponente, eine stückige Beimengung "Fruit pulp", die in eine Trägerflüssigkeit eingerührt sein kann, werden jeweils unter aseptischen Bedingungen einer UHT-Behandlung (Erhitzen, Heißhalten, Kühlen) unterzogen. Anschließend werden die beiden diesbezüglich behandelten Komponenten unter aseptischen Bedingungen miteinander gemischt ("Aseptic in-line blending") und anschließend kalt in Behältnisse abgefüllt. Die Förderung der ersten Komponente bis zur Zusammenführung mit der zweiten Komponente erfolgt mit zwei in dieser Prozesslinie angeordneten Fördereinrichtungen, von denen die erste vorzugsweise als Kreiselpumpe und die einem Steriltank nachgeordnete zweite vorzugsweise als rotierende Verdrängerpumpe ausgebildet ist. Die Förderung der vorzugsweise in eine Trägerflüssigkeit eingerührten stückigen Beimengungen wird in der zugeordneten Prozesslinie vorzugsweise mit zwei rotierenden Verdrängerpumpen durchgeführt, wobei die zweite wiederum hinter einem zugeordneten Steriltank angeordnet ist.

Aus der JP 2012-143174 A ist eine UHT-Anlage bekannt, in der analog zum vorbeschriebenen Stand der Technik zwei vergleichbare Komponenten getrennt einer UHT-Behandlung unterzogen, anschließend miteinander gemischt und schließlich kalt in Behältnisse abgefüllt werden. Auch erfolgt die Förderung der jeweiligen Komponente mit rotierend arbeitenden Fördereinrichtungen, deren Wirkungsweise jedoch nicht näher spezifiziert ist.

In den vorbeschriebenen bekannten UHT-Anlagen erfolgt die Her- und/oder Bereitstellung der stückigen Beimengungen, ggf. eingerührt in eine Trägerflüssigkeit, nachfolgend als Mischprodukt bezeichnet, in einem Anmischbehälter und in beiden Fällen wird eine Kaltabfüllung durchgeführt, die Vorteile gegenüber einer sog. Heißabfüllung aufweist. Bei der Kaltabfüllung muss das abzufüllende Mischprodukt zwar bis zur unmittelbaren Befüllung des Behältnisses unter aseptischen Bedingungen behandelt werden, jedoch kann man dann sicher davon ausgehen, dass das Mischprodukt bis in den Kern der stückigen Beimengungen sterilisiert wurde. Zu dem in das Behältnis abgefüllten Mischprodukt kann in einem zweiten Schritt eine weitere kalte, aseptisch behandelte Flüssigkeit bis zur vollständigen Befüllung des Behältnisses zugegeben werden. Bei der Heißabfüllung hingegen wird kaltes, nicht aseptisch behandeltes Mischprodukt in heiße Flüssigkeit im Behältnis eingebracht und es muss dabei eine Erhitzung bis in den Kern der stückigen Beimengungen im Mischprodukt stattfinden, damit ein keimfreier Zustand der abgefüllten stückigen Beimengungen sichergestellt ist. Dieser thermodynamische Prozess der Wärmeeindringung in die stückigen Beimengungen ist zumindest zeitkritisch und hängt von stofflichen Voraussetzungen und physikalischen Randbedingungen ab, die problematisch sein und die notwendige Sterilität des Endproduktes gefährden können.

Generell problematisch bei dem vorbeschriebenen Stand der Technik ist der Sachverhalt, dass die stückigen Beimengungen in den erforderlichen rotierend arbeitenden Fördereinrichtungen, unabhängig davon, ob diese als Verdrängerpumpen wie Schrauben- oder Flügelzellenpumpen oder als Zentrifugalpumpen arbeiten, notorisch mechanischen und/oder strömungsmechanischen Beanspruchungen, insbesondere Scherbeanspruchungen, ausgesetzt sind. Aus diesem Grunde werden die UHT-Anlagen der in Rede stehenden Art beispielsweise mit einem Volumenstrom von nur 700 bis 900 Liter/Stunde betrieben, woraus in Rohrleitungen mit kreisförmigem Durchtrittsquerschnitt bei einem üblichen Nenndurchmesser von 42 mm im Mittel eine Strömungsgeschwindigkeit von 0,15 bis 0,2 m/s resultiert.

Um weitere diesbezügliche Beanspruchungen außerhalb der Fördereinrichtungen zu minimieren, werden die Strömungswege in den einschlägigen UHT-Anlagenteilen, vom Her- und/oder Bereitstellen des Mischprodukts bis zu dessen Abfüllung in Behältnisse, als Monorohre mit durchgängig gleichem Durchmesser ausgeführt. Darüber hinaus werden weitestgehend Querschnittsänderungen, - übergänge und scharfe Umlenkungen, vor allem unstetige Querschnittsänderungen, Verzweigungen und Vereinigungen von Strömungsführungen, die notorisch mit Stoßverlusten und Scherbeanspruchungen einhergehen, vermieden.

Die Wärmeaustauscher der diesbezüglichen UHT-Anlagen sind als sog. Einrohr-Rohrwärmeaustauscher ausgebildet. Dieser Wärmeaustauschertyp wird auch als Monorohr- oder Monotube-Wärmeaustauscher bezeichnet, bei dem das thermisch zu behandelnde Produkt die Innenseite eines einen Innenkanal bildenden einzigen Wärmeaustauscherrohres berührt und bei dem ein Wärmeträgermedium in einem von einem Außenmantel umgebenden Außenkanal die Außenseite dieses Wärmeaustauscherrohres vorzugsweise im Gegenstrom beaufschlagt. Diese Ausführungsform weist eine geringe Verstopfungsanfälligkeit und geringe Scherbeanspruchungen auf.

Es ist Aufgabe der vorliegenden Erfindung, ein Verfahren und eine UHT-Anlage zur schonenden Behandlung eines stückige Beimengungen beinhaltenden Produkts oder eines aus einer Trägerflüssigkeit und solchen stückigen Beimengungen bestehenden Mischprodukts unter aseptischen Bedingungen anzugeben, durch die eine schonendere Behandlung über das im Stand der Technik bislang erreichte Maß hinaus sichergestellt ist.

## ZUSAMMENFASSUNG DER ERFINDUNG

Diese Aufgabe wird durch ein Verfahren mit den Merkmalen des Anspruchs 1 gelöst. Vorteilhafte Ausgestaltungen des Verfahrens sind Gegenstand der Unteransprüche. Eine UHT-Anlage zur Durchführung des erfindungsgemäßen Verfahrens ist Gegenstand des Nebenanspruchs 13. Vorteilhafte Ausgestaltungen der UHT-Anlage sind Gegenstand der zugeordneten Unteransprüche.

Das erfindungsgemäße Verfahren geht in an sich bekannter Weise aus von einem Verfahren, bei dem das Produkt oder Mischprodukt an einem ersten Ort her- und/oder bereitgestellt und an einem zweiten Ort kalt abgefüllt wird, bei dem das Produkt oder Mischprodukt vom ersten zum zweiten Ort zwangsweise gefördert wird und dabei wenigstens eine Erhitzung, eine Heißhaltung und eine Kühlung erfährt und bei dem ein den ersten und den zweiten Ort fluidgängig verbindender Strömungsweg vorgesehen ist.

Der erfinderische Grundgedanke besteht darin, dass in einer Betriebsphase des Verfahrens die zwangsweise Förderung des Produkts oder des Mischprodukts, d.h. die Generierung des notwendigen Volumenstroms und damit einer diesen Volumenstrom im Strömungsweg darstellenden Strömungsgeschwindigkeit, die als produktspezifische Strömungsgeschwindigkeit einstellbar ist, ausschließlich durch einen am ersten Ort im Produkt oder Mischprodukt bereitzustellenden ersten Druck erzeugt wird. Dieser erste Druck, der alle Strömungswiderstände und Verluste in einem durch das Produkt oder Mischprodukt zwischen dem ersten und dem zweiten Ort beaufschlagten Hauptströmungsweg überwinden muss, wird durch einen Treibdruck eines pneumatischen Druckmittels generiert. Dieser Treibdruck, der das Produkt oder Mischprodukt vorzugsweise über dessen freie Oberfläche an dem ersten Ort beaufschlagt, wird in Abhängigkeit von dem ersten Druck gesteuert.

Die Förderung des sensiblen Produkts oder Mischprodukts erfolgt damit in der Betriebsphase erfindungsgemäß ohne die Inanspruchnahme der rotierenden Fördereinrichtung und ohne die damit zwangläufig einhergehenden mechanischen und/oder strömungsmechanischen Beanspruchungen. Es hat sich im Ergebnis gezeigt, dass durch die erfindungsgemäßen Maßnahmen der Anteil der unversehrt bleibenden stückigen Beimengungen, die vom ersten zum zweiten Ort gefördert werden, von vormals 70 % bei der herkömmlichen Förderung auf nunmehr 90 bis 95 % bei der erfindungsgemäßen Förderung gesteigert werden konnte.

Im Unterschied zu bekannten Verfahren ist bei dem erfindungsgemäßen Verfahren der Strömungsweg zwischen dem ersten und dem zweiten Ort als ein Hauptströmungsweg mit einer Bypass-Schleife ausgestaltet, wobei in der Bypass-Schleife eine herkömmliche Fördereinrichtung, vorzugsweise als rotierende Verdrängerpumpe ausgestaltet, angeordnet ist.

Bei dem erfindungsgemäßen Verfahren sind weiterhin folgende Schritte vorgesehen:

(a) in einer Anlaufphase wird der aus dem Hauptströmungsweg und der Bypass-Schleife bestehende Strömungsweg mit Wasser oder einem adäquaten flüssigen Medium gefüllt und durchströmt, wobei es sich bei dem Medium auch um die reine Trägerflüssigkeit handeln kann;

(b) das Wasser oder Medium wird dazu mittels der in der Bypass-Schleife angeordneten Fördereinrichtung gefördert;

(c) wenigstens die Durchströmung des Hauptströmungsweges erfolgt mit einer produktspezifischen Fördergeschwindigkeit, die vorzugsweise über die gesamte Länge des Hauptströmungsweges durchgängig auf einen konstanten Wert geregelt wird;

(d) eine Übergangsphase wird eingeleitet durch Umschalten von Wasser oder Medium auf das am ersten Ort bereitgestellte Produkt oder Mischprodukt unter den Bedingungen der Schritte (b) und (c);

(e) eine Lage einer mit der Fördergeschwindigkeit im Hauptströmungsweg fortschreitenden Phasengrenzfläche, gebildet zwischen dem Produkt oder Mischprodukt und dem Wasser oder Medium, wird fortlaufend ermittelt, beispielsweise durch Ermittlung eines eine Messstelle im Hauptströmungsweg durchsetzenden Volumens, beginnend mit einem Startzeitpunkt der Einspeisung des Produktes oder Mischproduktes in den Hauptströmungsweg, und bei Kenntnis der Geometriedaten (Länge und Durchtrittsquerschnitt) des Hauptströmungsweges;

(f) wenn die Phasengrenzfläche einen vorbestimmten Abstand von einer Abzweigungsstelle erreicht hat, an der sich, in Strömungsrichtung gesehen, der Hauptströmungsweg in die Bypass-Schleife verzweigt, erfolgt ein gesteuerter Übergang von der Förderung durch die Fördereinrichtung auf eine zwangsweise Förderung, die, wie vorstehend bereits angegeben, durch die Druckbeaufschlagung mit dem pneumatischen Druckmittel auf das am ersten Ort bereitgestellten Produkt oder Mischprodukt bewirkt wird und die sich nunmehr ausschließlich und nachhaltig über den Hauptströmungsweg vollzieht;

(g) das Produkt oder Mischprodukt schiebt mit der in Schritt (c) definierten Fördergeschwindigkeit das Wasser oder Medium über den Hauptströmungsweg an dem zweiten Ort aus;

(h) in einer sich anschließenden Betriebsphase (B) wird die Fördergeschwindigkeit (c), wie vorstehend bereits angegeben, von dem am ersten Ort im Produkt oder Mischprodukt bereitzustellenden ersten Druck erzeugt, wobei dieser ursächlich durch einen vom ersten Druck abhängigen, steuerbaren Treibdruck des pneumatischen Druckmittels generiert wird.

In der Übergangsphase U wird zwischen dem Mischprodukt M einerseits und dem Wasser oder Medium W andererseits eine Phasengrenzfläche gebildet, deren momentane Position mit Lage der Phasengrenzfläche Lx bezeichnet ist. Eine Lage der Phasengrenzfläche zur Zeit t, bezeichnet mit Lx(t), wird durch Ermittlung eines in einer Zeitspanne (t - t1) zwischen einem Startzeitpunkt t1 und einem Messzeitpunkt t an einer Messstelle durchgesetzten Verdrängungsvolumens $\Delta V(t)$ (z.B. durch eine Volumenzählung in Litern) oder alternativ durch eine zeitabhängige Durchflussmessung Q(t) (z.B. in Liter/s) an der besagten Messstelle in der angegebenen Zeitspanne (t - t1) nach Gleichung (1), wie folgt, bestimmt:

$$Lx(t) = \frac{\Delta V(t)}{(DN)^2 \frac{\pi}{4}} = \frac{\Delta V_{t1}^{t}}{(DN)^2 \frac{\pi}{4}} = \frac{\int_{t1}^{t} Q(t)dt}{(DN)^2 \frac{\pi}{4}} \tag{1}$$

Analog hierzu befindet sich die besagte Phasengrenzfläche Lx zu einer Umschaltzeit t2 in einem vorbestimmten Abstand a von der Abzweigungsstelle, wobei eine Lage der Phasengrenzfläche im Abstand a von der Abzweigungsstelle zur Umschaltzeit t2, bezeichnet mit Lx(t2) = Lx(a), über Gleichung (2) bestimmt wird:

$$Lx(t2) = Lx(a) = \frac{\Delta V(t2)}{(DN)^2 \frac{\pi}{4}} = \frac{\Delta V_{t1}^{t2}}{(DN)^2 \frac{\pi}{4}} = \frac{\int_{t1}^{t2} Q(t)dt}{(DN)^2 \frac{\pi}{4}}. \tag{2}$$

Ein erstes Verdrängungsvolumen zwischen dem Startzeitpunkt t1 und dem Umschaltzeitpunkt t2, bezeichnet mit $\Delta V(t2)$, des Hauptströmungsweges bis zum vorbestimmten Abstand a ist entweder bekannt oder kann gemessen werden.

Die Erfindung schlägt eine verfahrenstechnische Ausgestaltung vor, nach der die Fördergeschwindigkeit in Abhängigkeit von den Eigenschaften der stückigen Beimengungen eingestellt wird, wobei unter den Eigenschaften der stückigen Beimengungen beispielhaft die Scherfestigkeit, die Größe und/oder die Zusammensetzung der stückigen Beimengungen verstanden wird. Dadurch ist das vorgeschlagene Verfahren an die speziellen Bedürfnisse der stückigen Beimengungen anpassbar.

Die Erfindung schlägt weiterhin eine verfahrenstechnische Ausgestaltung vor, nach der die Fördergeschwindigkeit in Abhängigkeit von den Eigenschaften der Trägerflüssigkeit eingestellt wird, wobei unter den Eigenschaften der Trägerflüssigkeit beispielhaft der Volumenstrom, die Viskosität, der Druck, die Temperatur und/oder die Zusammensetzung der Trägerflüssigkeit verstanden wird. Dadurch ist das vorgeschlagene Verfahren an die speziellen Bedürfnisse der Trägerflüssigkeit anpassbar

Da das erfindungsgemäße Verfahren nicht losgelöst von den physikalischen Randbedingungen, denen es unterworfen ist, betrieben werden kann, sieht eine andere verfahrenstechnische Ausgestaltung vor, dass die Fördergeschwindigkeit in Abhängigkeit von den physikalischen Randbedingungen eingestellt wird, wobei unter den physikalischen Randbedingungen des Verfahrens prozessbedingte Vorgabeparameter des Verfahrens wie Druck und Temperatur verstanden wird.

Eine andere Ausgestaltung des Verfahrens sieht vor, dass die Fördergeschwindigkeit mittels einer vor oder bei Inbetriebnahme des Verfahrens erstellten und hinterlegten Kalibrierfunktion eingestellt wird. Dadurch kann die erfindungsgemäße Behandlung auf gewonnene produktspezifische Erfahrungswerte zeit- und kostensparend gestützt und mit hoher Qualität für das Produkt oder Mischprodukt betrieben werden.

Die Qualität des behandelten Produkts oder Mischprodukts ist auch entscheidend abhängig von einer sicheren Handhabung der Umschaltphase. Diese wird signifikant beeinflusst von der genauen Kenntnis der Lage der Phasengrenzfläche, die möglichst nah an die Abzweigungsstelle heranzuführen ist, damit der gesteuerte Übergang von der Förderung durch die Fördereinrichtung auf eine ausschließlich zwangsweise Förderung durch das pneumatische Druckmittel sicher vollzogen werden kann. Hierzu sieht eine Ausgestaltung des Verfahrens vor, dass sich der vorbestimmte Abstand von der Abzweigungsstelle aus der Fördergeschwindigkeit und aus einer Umschaltzeit ergibt, die benötigt wird, um einerseits die Durchströmung der Bypass-Schleife zu unterbrechen und um andererseits die Durchströmung des Hauptströmungsweges im Bereich der Bypass-Schleife durchgängig sicherzustellen.

Die Förderung mittels der Fördereinrichtung wird, wie dies ein weiterer Vorschlag vorsieht, in der Übergangsphase zweckmäßig durch den ersten Druck unterstützt, wobei diese Unterstützung mit zunehmender Intensität durchgeführt wird, und zwar dadurch, dass, wie dies ebenfalls vorgeschlagen wird, der erste Druck bis auf einen in der Betriebsphase erforderlichen Enddruck, beispielsweise vorzugsweise kontinuierlich oder auch in diskreten Schritten, erhöht wird. Durch diese Maßnahmen wird die schonende Behandlung des Produkts oder des Mischprodukts zusätzlich befördert.

Ein weiterer Vorschlag sieht vor, dass das Produkt oder Mischprodukt am ersten Ort in mehr als einem Volumenbereich, die jeweils räumlich und stoffdicht voneinander abgegrenzt sind, her- und/oder bereitgestellt wird. Werden diesbezüglich zwei Volumenbereiche vorgesehen, dann können diese im Wechsel betrieben werden, wodurch sich bei üblicherweise diskontinuierlicher Her- und/oder Bereitstellung des Produkts oder Mischprodukts quasi eine kontinuierliche Prozessführung erreichen lässt. Werden gemäß einem weiteren Vorschlag drei Volumenbereiche vorgesehen, die nacheinander und in zyklischer Abfolge betrieben werden, dann kann während des Betriebs des zweiten Volumenbereichs das Druckmittel aus dem entleerten ersten Volumenbereich in dem dem zweiten Volumenbereich nachfolgenden dritten Volumenbereich wenigstens teilweise wiederverwendet werden, wodurch ein sparsamer Umgang mit Ressourcen bzw. Hilfsstoffen erreicht wird.

Die schonende Behandlung des Produkts oder des Mischprodukts in der Übergangs- und der anschließenden Betriebsphase wird nach einen weiteren Vorschlag zusätzlich dadurch unterstützt, dass wenigstens die Strömung im Hauptströmungsweg keine unstetigen Umlenkungen erfährt und notwendige Umlenkungen mit einer stetigen Krümmung durchgeführt werden, bei der das Verhältnis zwischen einem auf eine Mittelachse der Strömung bezogenen mittleren Krümmungsradius und einer quer zur Strömungsrichtung gemessenen mittleren Erstreckungsrichtung der Strömung einen Wert von 3 bis 5 aufweist.

Eine erfindungsgemäße UHT-Anlage zur Behandlung eines stückige Beimengungen beinhaltenden Produkts oder aus einer Trägerflüssigkeit und solchen stückigen Beimengungen bestehenden Mischprodukts unter aseptischen Bedingungen geht in an sich bekannter Weise aus von wenigstens einem Anmischbehälter an einem ersten Ort und einem Steriltank und einer aus diesem gespeisten Fülleinrichtung zur Befüllung von Behältnissen an einem zweiten Ort, von einem Strömungsweg, der einerseits über eine Ablaufleitung mit dem wenigstens einen Anmischbehälter verbunden ist und der andererseits auf dem Weg über eine Fördereinrichtung in den Steriltank einmündet, und von wenigstens einem in dem Strömungsweg angeordneten Erhitzer, einem Heißhalter und einem Kühler.

Der erfinderischen Merkmale bestehen darin,

- dass in den Kopfraum des wenigstens einen Anmischbehälters eine Druckmittelleitung für ein pneumatisches Druckmittel einmündet;
- dass der Strömungsweg zwischen dem ersten und dem zweiten Ort aus einem Hauptströmungsweg besteht, aus dem an einer Abzweigungsstelle eine Bypass-Schleife abzweigt, die an einer stromabwärts in dem Hauptströmungsweg vorgesehenen Vereinigungsstelle in den Hauptströmungsweg einmündet;

- dass in der Bypass-Schleife die Fördereinrichtung angeordnet ist, der eine Drehzahlregelungseinrichtung zugeordnet ist;
- dass der jeweiligen Ablaufleitung eine vorgeordnete Druckregelungseinrichtung zugeordnet ist;
- dass der Druckmittelleitung eine mit einem Drucksteuerungsventil zusammenwirkende Drucksteuerungseinrichtung zugeordnet ist, die mit der vorgeordneten Druckregelungseinrichtung steuerungstechnisch verknüpft ist;
- dass dem Hauptströmungsweg stromabwärts hinter der Vereinigungsstelle eine nachgeordnete Druckregelungseinrichtung zugeordnet ist;
- dass dem Hauptströmungsweg stromabwärts hinter der Vereinigungsstelle eine Durchflussregelungseinrichtung zugeordnet ist, die mit der Drehzahlregelungseinrichtung zusammenwirkt, und
- dass eine Steuereinrichtung vorgesehen ist, die im Zusammenwirken mit der vorgeordneten und der nachgeordneten Druckregelungseinrichtung, der Drucksteuerungseinrichtung, dem Drucksteuerungsventil, der Durchflussregelungseinrichtung und der Drehzahlregelungseinrichtung eine produktspezifische Fördergeschwindigkeit wenigstens in dem Hauptströmungsweg einstellt.

Die schonende Behandlung des Produkts oder Mischprodukts wird dadurch zusätzlich befördert, dass gemäß einem ersten Vorschlag der Hauptströmungsweg und die Bypass-Schleife jeweils als Monorohr ausgebildet sind und dass weiterhin, wie dies ebenfalls vorgesehen ist, der Hauptströmungsweg und die Bypass-Schleife jeweils auf ihrer gesamten Länge durchgängig einen konstanten Durchtrittsquerschnitt aufweisen, wobei es darüber hinaus zielführend ist, wenn die Durchtrittsquerschnitte des Hauptströmungswegs und der Bypass-Schleife gleich sind.

Weitere zielführende Maßnahmen zur Steigerung einer schonenden Behandlung des Produkts oder Mischprodukts zeichnen sich dadurch aus, dass der Hauptströmungsweg und die Bypass-Schleife jeweils auf ihrer gesamten Länge produktschonende Umlenkradien aufweisen, wobei das Verhältnis aus mittlerem Krümmungsradius und einer quer zur Strömungsrichtung orientierten Abmessung des Hauptströmungswegs oder der Bypass-Schleife einen Wert zwischen 3 und 5 aufweist.

Es ist weiterhin vorgesehen, dass die Fördereinrichtung als rotierende Verdrängerpumpe wie beispielsweise als Schrauben- oder Flügelzellenpumpe ausgebildet ist.

Wird die UHT-Anlage gemäß einem weiteren Vorschlag dergestalt ausgebildet, dass der Hauptströmungsweg zwischen dem wenigstens einen Anmischbehälter und der Abzweigungsstelle wahlweise über einen Vorlaufbehälter geführt ist, dann kann die vorgeschlagene UHT-Anlage das zu überführende Produkt oder Mischprodukt in herkömmlicher Weise über die Fördereinrichtung auch aus dem Vorlaufbehälter ansaugen, wenn es dort bevorratet ist, und gleichfalls über die Fördereinrichtung an den zweiten Ort zwecks Abfüllung zwangsweise verbringen.

## KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausgestaltungen eines Verfahrens der eingangs beschriebenen Art und den verschiedensten Ausführungsformen einer UHT-Anlage zur Durchführung des Verfahrens realisiert ist, wird nachfolgend anhand der Zeichnung ein bevorzugtes Ausführungsbeispiel einer erfindungsgemäßen UHT-Anlage, mit der das erfindungsgemäße Verfahren beispielhaft durchführbar ist, beschrieben. Es zeigen

**Figur 1**    in schematischer Darstellung eine erfindungsgemäße UHT-Anlage zur Behandlung eines stückige Beimengungen beinhaltenden Produkts oder aus einer Trägerflüssigkeit und solchen stückigen Beimengungen bestehenden Mischprodukts unter aseptischen Bedingungen;

**Figur 2**    in schematischer Darstellung einen Ausschnitt aus der UHT-Anlage gemäß **Figur 1** im Bereich wenigstens eines Anmischbehälters und eines nachgeordneten Bereichs, in dem in einer zu einem Hauptströmungsweg verlaufenden Bypass-Schleife eine Fördereinrichtung angeordnet ist;

**Figur 3a**    in schematischer Darstellung den Hauptströmungsweg mit seiner Bypass-Schleife gemäß **Figur 2** in einer Anlaufphase **"A"** des erfindungsgemäßen Verfahrens;

**Figur 3b**    in schematischer Darstellung den Hauptströmungsweg mit seiner Bypass-Schleife gemäß **Figur 3a** in einer Übergangsphase **"U"** des erfindungsgemäßen Verfahrens und

**Figur 4**    in schematischer Darstellung einen Ausschnitt aus der UHT-Anlage gemäß **Figur 2** in einer Betriebsphase **"B"** des erfindungsgemäßen Verfahrens.

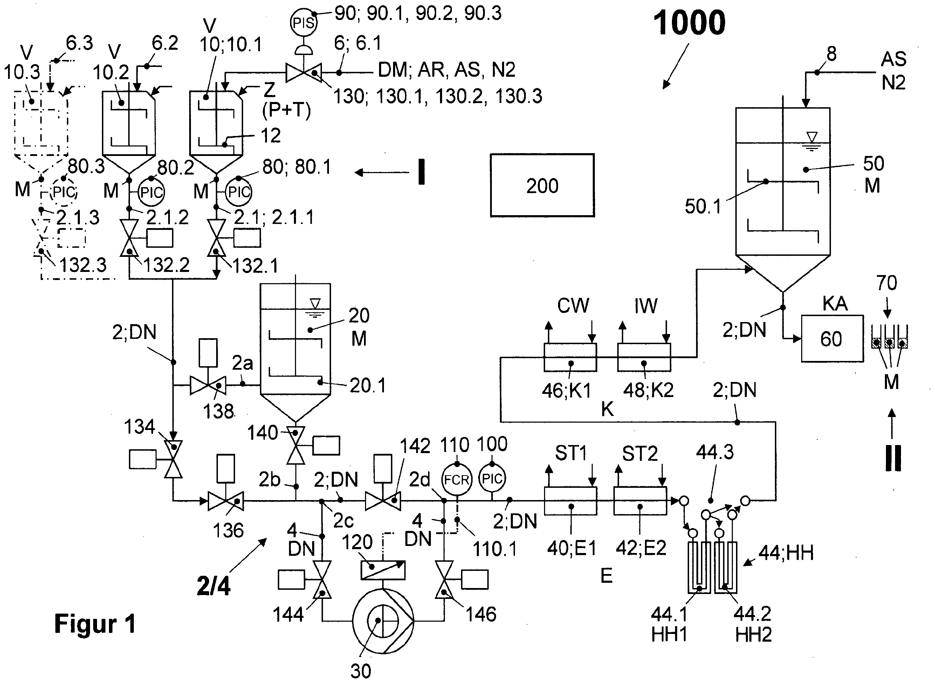

Eine UHT-Anlage 1000 zur Behandlung eines stückige Beimengungen P beinhaltenden Produkts oder aus einer Trägerflüssigkeit T und solchen stückigen Beimengungen P bestehenden Mischprodukts M unter aseptischen Bedingungen zeigt **Figur 1**. Die UHT-Anlage 1000 weist an einem ersten Ort I wenigstens einen Anmischbehälter 10 mit einer ersten Rühreinrichtung 12 auf, in dessen Kopfraum eine Druckmittelleitung 6 für ein pneumatisches Druckmittel DM, welches beispielsweise Druckluft AR, Sterilluft AS oder gasförmiger Stickstoff N2 sein kann, einmündet. Der wenigstens eine Anmischbehälter 10 ist so druckfest ausgelegt, dass er einem notwendigen Innendruck, ausgeübt durch das pneumatische Druckmittel DM, standhält, und er besitzt in seinem Kopfbereich eine Zufuhröffnung Z zur Einbringung der stückigen Bestandteile P und gegebenenfalls der Trägerflüssigkeit T. An einem zweiten Ort II befindet sich ein Steriltank 50 mit einer zweiten Rühreinrichtung 50.1 zur Bevorratung des Produkts oder Mischprodukts M und eine aus diesem gespeiste Fülleinrichtung 60 zur Kaltabfüllung KA von Behältnissen 70 mit dem Produkt oder Mischprodukt M. Der Steriltank 50 ist über eine Zufuhrleitung für gasförmiges Sterilmittel 8, beispielsweise mit Sterilluft AS oder gasförmigem Stickstoff N2, beaufschlagbar. Ein Hauptströmungsweg 2, der einerseits über eine Ablaufleitung 2.1 mit dem wenigstens einen Anmischbehälter 10 verbunden ist, mündet andererseits in den Steriltank 50 ein und setzt sich von dort bis in die Fülleinrichtung 60 fort. Aus dem Hauptströmungsweg 2 zweigt an einer Abzweigungsstelle 2c eine Bypass-Schleife 4 ab, die an einer stromabwärts in dem Hauptströmungsweg 2 vorgesehenen Vereinigungsstelle 2d in den Hauptströmungsweg 2 einmündet. In der Bypass-Schleife 4 ist eine Fördereinrichtung 30, vorzugsweise eine rotierende Verdrängerpumpe, angeordnet, der eine Drehzahlregelungseinrichtung 120 zugeordnet ist. Der Hauptströmungsweg 2 und die zu einem Abschnitt des Hauptströmungsweges 2 parallel verlaufende Bypass-Schleife 4 bilden einen den ersten mit dem zweiten Ort I, II fluidgängig verbindenden Strömungsweg 2/4, der vorzugsweise einen durchgängig überall gleichen Durchtrittsquerschnitt in Gestalt eines sogenannten Monorohres, vorzugsweise in Form eines kreisförmigen Rohres mit einem Nenndurchmesser DN, aufweist.

In dem Hauptströmungsweg 2 sind stromabwärts der Vereinigungsstelle 2d und in der genannten Reihenfolge folgende Aggregate angeordnet:

- zur Erhitzung E des Produkts oder Mischprodukts M ein erster Erhitzer 40 für eine erste Erhitzung E1, der von einem ersten Dampf ST1 beaufschlagt ist, und ein zweiter Erhitzer 42 für eine zweite Erhitzung E2, der mit einem zweiten Dampf ST2 beaufschlagt ist;
- zur Heißhaltung HH des Produkts oder Mischprodukts M ein Heißhalter 44, bestehend aus einem ersten Heißhalterteil 44.1 für eine erste Heißhaltung HH1 und einem zweiten Heißhalterteil 44.2 für eine zweite Heißhaltung HH2, wobei den Heißhalterteilen 44.1 und 44.2 zur wahlweisen Beaufschlagung (44.1 oder 44.1 + 44.2) eine Schalteinrichtung 44.3 zugeordnet ist;
- zur Kühlung K des Produkts oder des Mischprodukts M ein erster Kühler 46 für eine erste Kühlung K1, der mit einem Kühlwasser CW beaufschlagt ist, und ein zweiter Kühler 48 für eine zweite Kühlung K2, der mit Eiswasser IW beaufschlagt ist.

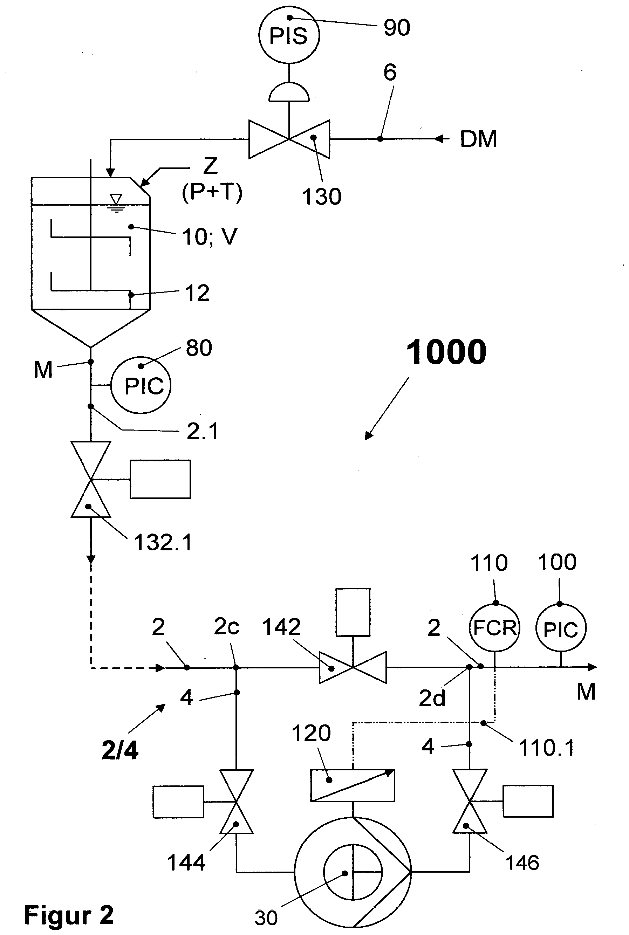

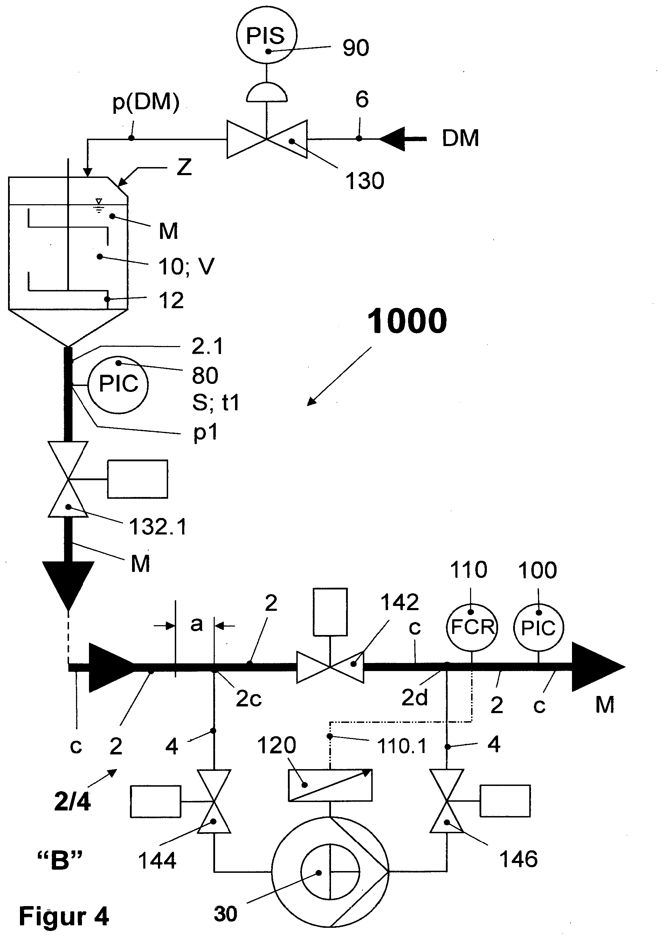

Der Ablaufleitung 2.1 (siehe **Figuren 1, 2**) ist eine vorgeordnete Druckregelungseinrichtung 80 (Fähigkeit, einen Druck "P" anzuzeigen "I" und unabhängig zu regeln "C" → PIC) und der Druckmittelleitung 6 ist eine mit einem Drucksteuerungsventil 130 zusammenwirkende Drucksteuerungseinrichtung 90 (Fähigkeit, einen Druck "P" anzuzeigen "I" und abhängig zu steuern "S" → PIS) zugeordnet, wobei letztere mit der vorgeordneten Druckregelungseinrichtung 80 steuerungstechnisch verknüpft ist (Verknüpfungssteuerung "S"). Dem Hauptströmungsweg 2 sind stromabwärts hinter der Vereinigungsstelle 2d eine nachgeordnete Druckregelungseinrichtung 100 (Fähigkeit, einen Druck "P" anzuzeigen "I" und unabhängig zu regeln "C" → PIC) und eine Durchflussregelungseinrichtung 110 (Fähigkeit, einen Durchfluss "F" zu regeln "C" und zu registrieren "R" → FCR), die mit der Drehzahlregelungseinrichtung 120 über eine Steuerleitung 110.1 zusammenwirkt, zugeordnet. Eine Steuereinrichtung 200 stellt im Zusammenwirken mit der vorgeordneten und der nachgeordneten Druckregelungseinrichtung 80, 100, der Drucksteuerungseinrichtung 90, dem Drucksteuerungsventil 130, der Durchflussregelungseinrichtung 110 und der Drehzahlregelungseinrichtung 120 eine produktspezifische Fördergeschwindigkeit c wenigstens in dem Hauptströmungsweg 2 ein **(Figur 4)**.

Für eine nachfolgend im Rahmen der Durchführung des erfindungsgemäßen Verfahrens beschriebene Anlaufphase A, eine Übergangsphase U und eine Betriebsphase B sind weiterhin in einem diesbezüglich betroffenen Teil der UHT-Anlage 1000, der in **Figur 2** dargestellt ist, die folgenden Absperrventile erforderlich:

- ein vorgeordnetes erstes Absperrventil 132.1 in der Ablaufleitung 2.1;
- ein zweites und ein drittes Absperrventil 134, 136 im Hauptströmungsweg 2 stromaufwärts der Abzweigungsstelle 2c **(Figur 1)**;
- ein sechstes Absperrventil 142 im Hauptströmungsweg 2 zwischen der Abzweigungsstelle 2c und der Vereinigungsstelle 2d und
- ein siebtes Absperrventil 144 in der Bypass-Schleife 4 vor und ein achtes Absperrventil 146 in der Bypass-Schleife 4 nach der Fördereinrichtung 30.

Für den Fall, dass in der UHT-Anlage 1000 ein Vorlaufbehälter 20 mit einer dritten Rühreinrichtung 20.1 zur Bevorratung von Produkt oder Mischprodukt M in einer bekannten und herkömmlichen Weise vorgesehen ist, wie dies aus **Figur 1** ersichtlich ist, sind

- in einer vom Hauptströmungsweg 2 abzweigenden und zum Vorlaufbehälter 20 führenden Zulaufleitung 2a ein viertes Absperrventil 138 und
- in einer stromaufwärts von der Abzweigungsstelle 2c in den Hauptströmungsweg 2 einmündenden und von dem Vorlaufbehälter 20 wegführenden Ablaufleitung 2b ein fünftes Absperrventil 140 angeordnet.

Falls, wie das Ausführungsbeispiel gemäß **Figur 1** zeigt, drei Anmischbehälter 10.1, 10.2 und 10.3 am ersten Ort I vorgesehen sind, die jeweils einen Volumenbereich V abgrenzen, die vorzugsweise gleichgroß sind, sind jedem dieser Anmischbehälter in der vorstehend für den wenigstens einen Anmischbehälter 10 beschriebenen Weise folgende Bauteile zugeordnet:

- erster Anmischbehälter 10.1 mit einer ersten Rühreinrichtung 12, einer ersten Ablaufleitung 2.1.1, einer ersten Druckmittelleitung 6.1, einer vorgeordneten ersten Druckregelungseinrichtung 80.1, einer mit einem ersten Drucksteuerungsventil 130.1 zusammenwirkenden ersten Drucksteuerungseinrichtung 90.1, die steuerungstechnisch mit der vorgeordneten ersten Druckregelungseinrichtung 80.1 verknüpft ist und das vorgeordnete erste Absperrventil 132.1;
- zweiter Anmischbehälter 10.2 mit einer ersten Rühreinrichtung 12, einer zweiten Ablaufleitung 2.1.2, einer zweiten Druckmittelleitung 6.2, einer vorgeordneten zweiten Druckregelungseinrichtung 80.2, einer mit einem zweiten Drucksteuerungsventil 130.2 zusammenwirkenden zweiten Drucksteuerungseinrichtung 90.2, die steuerungstechnisch mit der vorgeordneten zweiten Druckregelungseinrichtung 80.2 verknüpft ist und ein vorgeordnetes zweites Absperrventil 132.2;
- dritter Anmischbehälter 10.3 mit einer ersten Rühreinrichtung 12, einer dritten Ablaufleitung 2.1.3, einer dritten Druckmittelleitung 6.3, einer vorgeordneten dritten Druckregelungseinrichtung 80.3, einer mit einem dritten Drucksteuerungsventil 130.3 zusammenwirkenden dritten Drucksteuerungseinrichtung 90.3, die steuerungstechnisch mit der vorgeordneten dritten Druckregelungseinrichtung 80.3 verknüpft ist und ein vorgeordnetes drittes Absperrventil 132.3.

Der Hauptströmungsweg 2 und die Bypass-Schleife 4 sind jeweils bevorzugt als Monorohr ausgebildet, das jeweils auf seiner gesamten Länge durchgängig einen konstanten Durchtrittsquerschnitt, vorzugsweise ausgeführt als kreisförmiges Rohr mit dem Nenndurchmesser DN, aufweist. Weiterhin ist es vorteilhaft, wenn die Durchtrittsquerschnitte des Hauptströmungswegs 2 und der Bypass-Schleife 4 gleich sind. Die schonende Behandlung des Produkts oder des Mischprodukts M wird weiterhin dadurch befördert, dass der Hauptströmungsweg 2 und die Bypass-Schleife 4 jeweils auf ihrer gesamten Länge produktschonende Umlenkradien aufweisen, wobei das Verhältnis aus mittlerem Krümmungsradius und einer quer zur Strömungsrichtung orientierten Abmessung (Nenndurchmesser DN bei einem kreisförmigen Rohr) des Hauptströmungswegs 2 oder der Bypass-Schleife 4 einen Wert zwischen 3 und 5 aufweist.

Die Fördereinrichtung 30 ist bevorzugt als rotierende Verdrängerpumpe, beispielweise in Gestalt einer Schrauben- oder Flügelzellenpumpe, ausgebildet. Um die erfindungsgemäße UHT-Anlage 1000 auch in der herkömmlichen Weise ausschließlich über die Fördereinrichtung 30 betreiben zu können, ist vorgesehen, dass der Hauptströmungsweg 2 zwischen dem wenigstens einen Anmischbehälter 10 bzw. 10.1, 10.2, 10.3 und der Abzweigungsstelle 2c wahlweise über den Vorlaufbehälter 20 geführt ist **(Figur 1)**.

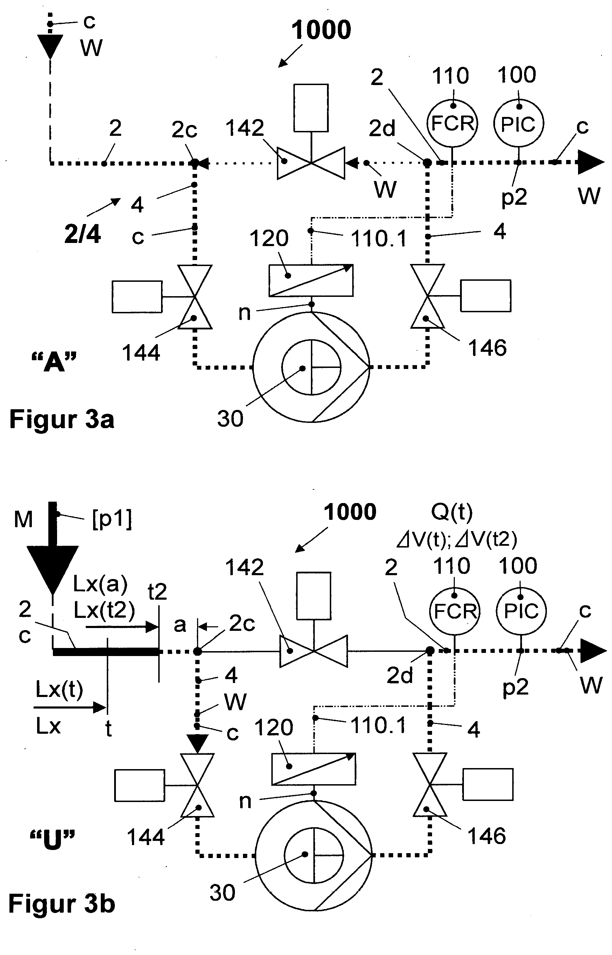

Das erfindungsgemäße Verfahren vollzieht sich in drei Phasen, die Anlaufphase A **(Figur 3a),** die Übergangsphase U **(Figur 3b)** und die Betriebsphase B **(Figur 4)**. Die genannten Figuren sind Ausschnitte aus den **Figuren 1** und **2**; bereits eingeführte Bezugszeichen werden, um Wiederholungen zu vermeiden, nachfolgend nicht mehr erläutert.

### Anlaufphase A (Figur 3a)

In der Anlaufphase A wird der Strömungsweg 2/4, bestehend aus dem Hauptströmungswege 2 und der Bypass-Schleife 4, mit Wasser oder einem adäquaten flüssigen Medium W gefüllt und zwangsweise mittels der Fördereinrichtung 30 durchströmt. Dazu sind das siebte und das achte Absperrventil 144, 146 geöffnet und das sechste Absperrventil 142 geschlossen. Zur vollständigen Befüllung und Durchströmung des Abschnittes des Hauptströmungsweges 2 zwischen der Vereinigungsstelle 2d und der Abzweigungsstelle 2c wird das sechste Absperrventil 142 beispielsweise temporär teilweise oder vollständig geöffnet. Eine Fördergeschwindigkeit wird zweckmäßig bereits so eingestellt und auf einen konstanten Wert geregelt, dass diese der produktspezifischen Fördergeschwindigkeit c des nachfolgend zu fördernden Produkts oder Mischprodukts M zumindest in jenem Teil des Hauptströmungsweges 2 entspricht, der in Richtung zum Steriltank 50 hin durchströmt wird. Es ist zweckmäßig auch die Bypass-Schleife 4 so auszulegen, dass auch hier die gleichen Strömungsbedingungen wie im Hauptströmungsweg 2 herrschen. Über die Durchflussregelungseinrichtung 110, die Drehzahlregelungseinrichtung 120 und die nachgeordnete Druckregelungseinrichtung 100 werden die Fördergeschwindigkeit c und ein zweiter Druck $p_2$ über eine hierzu erforderliche Drehzahl n der Fördereinrichtung 30 so eingeregelt, dass sich der zugeordnete Betriebspunkt der Pumpenkennlinie mit der in der Anlaufphase A wirksamen Rohrleitungs- bzw. Anlagenkennlinie einstellen kann.

### Übergangsphase U (Figur 3b)

Die Übergangsphase U wird eingeleitet durch Umschalten von Wasser oder Medium W auf das am ersten Ort I bereitgestellte Produkt oder Mischprodukt M über das vorgeordnete erste Absperrventil 132.1 **(Figur 4)** unter den Bedingungen der vorstehend beschriebenen Anlaufphase A (Förderung zunächst ausschließlich über die Fördereinrichtung 30; produktspezifische Fördergeschwindigkeit c). Hierzu ist das sechste Absperrventil 142 geschlossen und das siebte und achte Absperrventil 144, 146 bleiben geöffnet. Das Umschalten erfolgt zu einem Startzeitpunkt t1, wobei an der Stelle, an der das Produkt oder Mischprodukt M auf das Wasser oder Medium W trifft, ein Startsignal S generiert wird (z.B. nach Öffnen des ersten Absperrventils 132.1; **Figur 4**). Die Förderung mittels der Fördereinrichtung 30 kann durch einen ersten Druck p1 unterstützt werden. Diese Unterstützung kann bereits in der Anlaufphase A beginnen und sich in der Übergangsphase U fortsetzen, wobei der erste Druck p1 bis auf einen in der Betriebsphase B erforderlichen Enddruck, vorzugsweise kontinuierlich oder auch in diskreten Schritten, erhöht wird.

Eine momentane Position einer mit der Fördergeschwindigkeit c fortschreitenden Phasengrenzfläche Lx zwischen dem Produkt oder Mischprodukt M einerseits und dem von letzterem verdrängten Wasser oder Medium W andererseits wird fortlaufend in Abhängigkeit von der Zeit t ermittelt. Eine Lage der Phasengrenzfläche zur Zeit t ist in **Figur 3b** mit Lx(t) bezeichnet. Sie bemisst sich im Hauptströmungsweg 2 über dessen bekanntem Durchtrittsquerschnitt $(DN)^2 \frac{\pi}{4}$ aus einem vom Startzeitpunkt t1 in der Zeit t über die Durchflussregelungseinrichtung 110 auch unmittelbar messbaren Verdrängungsvolumen $\Delta V(t) = \Delta V_{t1}^{t}$. Dieses Verdrängungsvolumens $\Delta V(t)$ kann mittelbar auch über einen durch die Durchflussregelungseinrichtung 110 ebenfalls messbaren zeitabhängigen Volumenstrom Q(t) im Zeitintervall dt durch Integration von Q(t)dt in den Grenzen von t1 bis t nach Gleichung (1) ermittelt werden:

$$Lx(t) = \frac{\Delta V(t)}{(DN)^2 \frac{\pi}{4}} = \frac{\Delta V_{t1}^{t}}{(DN)^2 \frac{\pi}{4}} = \frac{\int_{t1}^{t} Q(t)dt}{(DN)^2 \frac{\pi}{4}} \qquad (1)$$

Wenn die Phasengrenzfläche Lx einen vorbestimmten Abstand a von der Abzweigungsstelle 2c erreicht hat, an der sich, in Strömungsrichtung gesehen, der Hauptströmungsweg 2 in die Bypass-Schleife 4 verzweigt, erfolgt ein gesteuerter Übergang von der Förderung durch die Fördereinrichtung 30 auf eine zwangsweise Förderung, die durch eine Druckbeaufschlagung mit dem pneumatischen Druckmittel DM auf das am ersten Ort I bereitgestellten Produkt oder Mischprodukt M bewirkt wird. Eine diesbezügliche Lage der Phasengrenzfläche im Abstand a von der Abzweigungsstelle 2c ist in **Figur 3b** mit Lx(a) oder Lx(t2) bezeichnet, und sie legt einen Umschaltzeitpunkt t2 fest. Der Lage der Phasengrenzfläche Lx(a) = Lx(t2) kann ein in der Zeitspanne (t2 - t1) durch die Durchflussregelungseinrichtung 110 messbares erstes Verdrängungsvolumen $\Delta V(t2) = \Delta V_{t1}^{t2}$ nach Gleichung (2) zugeordnet werden:

$$Lx(t2) = Lx(a) = \frac{\Delta V(t2)}{(DN)^2 \frac{\pi}{4}} = \frac{\Delta V_{t1}^{t2}}{(DN)^2 \frac{\pi}{4}} = \frac{\int_{t1}^{t2} Q(t)dt}{(DN)^2 \frac{\pi}{4}} \qquad (2)$$

Darüber hinaus durchmisst die Phasengrenzfläche Lx den definierten Abstand a mit der produktspezifischen Fördergeschwindigkeit c in einer Umschaltzeit Δt* nach Gleichung (3) mit

$$a = c \, \Delta t^{*}. \qquad (3)$$

Da für die ausgeführte UHT-Anlage 1000 das Verdrängungsvolumen zwischen der Stelle, die das Startsignal S zum Startzeitpunkt t1 auslöst, und der Abzweigungsstelle 2c des Hauptströmungsweges 2 bekannt bzw. einmal zu ermitteln ist, beispielsweise durch Auslitern, wobei ein diesbezügliches zweites Verdrängungsvolumen mit $\Delta V(2c) = \Delta V_{t1}^{t(2c)}$ bezeichnet werden soll, ergibt sich über die Verbindung der Gleichungen (2) und (3) folgender Zusammenhang für das erste Verdrängungsvolumen $\Delta V(t2)$ nach Gleichung (4):

$$\Delta V(t2) = \Delta V(2c) - c\ \Delta t^* \frac{(DN)^2 \pi}{4})  \qquad (4)$$

Da die rechten Terme der Gleichung (4) für die ausgeführte Anlage 1000 bekannt sind, ist somit auch der linksseitige Term der Gleichung (4) als Wert bekannt. Dieser Wert repräsentiert das erste Verdrängungsvolumen $\Delta V(t2)$, das über die Durchflussregelungseinrichtung 110 nach dem zum Startzeitpunkt t1 ausgelösten Startsignal S gemessen und wertmäßig erreicht werden muss, damit die Phasengrenzfläche Lx den vorbestimmten Abstand a von der Abzweigungsstelle 2c erreicht hat. Sobald dieser Wert an der Messstelle erreicht ist, erfolgt der vorstehend beschriebene gesteuerte Übergang von der Förderung durch die Fördereinrichtung 30 auf die Förderung durch das pneumatische Druckmittel DM, die sich nunmehr ausschließlich und nachhaltig über den Hauptströmungsweg 2 vollzieht. Das Produkt oder Mischprodukt M schiebt mit der Fördergeschwindigkeit c das Wasser oder Medium W über den Hauptströmungsweg 2 an dem zweiten Ort II **(Figur 1)** aus.

**Betriebsphase B (Figur 4)**

In der sich anschließenden Betriebsphase B wird zum Umschaltzeitpunt t2 das sechste Absperrventil 142 geöffnet und das siebte und achte Absperrventil 144, 146 werden geschlossen. Die Fördergeschwindigkeit c wird nunmehr ausschließlich und nachhaltig von dem am ersten Ort I im Produkt oder Mischprodukt M bereitzustellenden ersten Druck p1 erzeugt, wobei dieser ursächlich durch einen vom ersten Druck p1 abhängigen, steuerbaren Treibdruck p(DM) des pneumatischen Druckmittels DM generiert wird.

Der vorbestimmte Abstand a ergibt sich vorzugsweise aus der produktspezifischen Fördergeschwindigkeit c und aus der Umschaltzeit $\Delta t^*$ der Absperrventile 142, 144, 146, die notwendig ist, um einerseits die Durchströmung der Bypass-Schleife 4 zu unterbrechen und andererseits die Durchströmung des Hauptströmungsweges 2 im Bereich der Bypass-Schleife 4 durchgängig sicherzustellen.

Zur Vermeidung von Druckstößen und Durchflussschwankungen während der Übergangsphase U von der Anlauf- zur Betriebsphase A, B ist es zielführend, wenn die Förderung mittels der Fördereinrichtung 30 durch den ersten Druck p1 unterstützt wird, wobei vorzugsweise der erste Druck p1 bis auf einen in der Betriebsphase B erforderlichen Enddruck, vorzugsweise kontinuierlich oder auch in diskreten Schritten, erhöht wird.

Wenn der erste und der zweite Anmischbehälter 10.1, 10.2 mit jeweils dem vorzugsweise gleichgroßen Volumenbereich V vorgesehen sind, die im Wechsel betrieben werden können, dann ist ein quasikontinuierlicher Betrieb der UHT-Anlage 1000 durchführbar.

Werden der erste, der zweite und der dritte Anmischbehälter 10.1, 10.2, 10.3 mit jeweils dem vorzugsweise gleichgroßen Volumenbereich V vorgesehen und werden diese nacheinander und in zyklischer Abfolge betrieben, dann kann während des Betriebs beispielsweise des zweiten Anmischbehälters 10.2 das pneumatische Druckmittel DM, beispielweise Sterilluft AS oder gasförmiger Stickstoff N2, aus dem zuvor entleerten Anmischbehälter 10.1 in dem dem zweiten Anmischbehälter 10.2 nachfolgenden dritten Anmischbehälter 10.3 wenigstens teilweise wiederverwendet werden.

BEZUGSZEICHENLISTE DER VERWENDETEN ABKÜRZUNGEN

1000    UHT-Anlage

2/4    Strömungsweg

2      Hauptströmungsweg
2.1    Ablaufleitung
2.1.1  erste Ablaufleitung
2.1.2  zweite Ablaufleitung
2.1.3  dritte Ablaufleitung
2a     Zulaufleitung
2b     Auslaufleitung
2c     Abzweigungsstelle
2d     Vereinigungsstelle

4    Bypass-Schleife

6        Druckmittelleitung (allgemein)
6.1     erste Druckmittelleitung
6.2     zweite Druckmittelleitung
6.3     dritte Druckmittelleitung

8     Zufuhrleitung für gasförmiges Sterilmittel

10        Anmischbehälter (allgemein)
10.1    erster Anmischbehälter
10.2    zweiter Anmischbehälter
10.3    dritter Anmischbehälter

12     erste Rühreinrichtung

20        Vorlaufbehälter
20.1    dritte Rühreinrichtung
30        Fördereinrichtung
40        erster Erhitzer
42        zweiter Erhitzer

44        Heißhalter
44.1    erster Heißhalterteil
44.2    zweiter Heißhalterteil
44.3    Schalteinrichtung

46        erster Kühler
48        zweiter Kühler

50        Steriltank (Puffertank)
50.1    zweite Rühreinrichtung

60        Fülleinrichtung
70        befülltes Behältnis (Kaltabfüllung)

80        vorgeordnete Druckregelungseinrichtung
80.1    vorgeordnete erste Druckregelungseinrichtung
80.2    vorgeordnete zweite Druckregelungseinrichtung
80.3    vorgeordnete dritte Druckregelungseinrichtung

90        Drucksteuerungseinrichtung
90.1    erste Drucksteuerungseinrichtung
90.2    zweite Drucksteuerungseinrichtung
90.3    dritte Drucksteuerungseinrichtung

100      nachgeordnete Druckregelungseinrichtung

110       Durchflussregelungseinrichtung
110.1   Steuerleitung

120       Drehzahlregelungseinrichtung
130       Drucksteuerungsventil (allgemein)
130.1   erstes Drucksteuerungsventil
130.2   zweites Drucksteuerungsventil
130.3   drittes Drucksteuerungsventil

132.1   vorgeordnetes erstes Absperrventil
132.2   vorgeordnetes zweites Absperrventil
132.3   vorgeordnetes zweites Absperrventil

134    zweites Absperrventil
136    drittes Absperrventil
138    viertes Absperrventil
140    fünftes Absperrventil
142    sechstes Absperrventil
144    siebtes Absperrventil
146    achtes Absperrventil

200    Steuereinrichtung

I    erster Ort (Her- und/oder Bereitstellungsposition)
II    zweiter Ort (Abfüllposition

A    Anlaufphase
B    Betriebsphase
U    Übergangsphase

AR    Druckluft
AS    Sterilluft
CW    Kühlwasser
DM    (steriles) pneumatisches Druckmittel (z.B. AS; N2)
DN    Nenndurchmesser
E    Erhitzung (allgemein)
E1    erste Erhitzung
E2    zweite Erhitzung

FCR    Durchflussregelung und -registrierung

HH    Heißhaltung (allgemein)
HH1    erste Heißhaltung
HH2    zweite Heißhaltung

K    Kühlung (allgemein)
K1    erste Kühlung
K2    zweite Kühlung

IW    Eiswasser
KA    Kaltabfüllung

Lx    Lage der Phasengrenzfläche (zwischen M und W)

$$Lx(t) = \frac{\Delta V(t)}{(DN)^2\frac{\pi}{4}} = \frac{\Delta V_{t1}^t}{(DN)^2\frac{\pi}{4}} = \frac{\int_{t1}^t Q(t)dt}{(DN)^2\frac{\pi}{4}}$$

Lx(t)    Lage der Phasengrenzfläche zur Zeit t →
Lx(t2) = Lx(a)    Lage der Phasengrenzfläche im Abstand a von 2c zur Zeit t2 →

$$Lx(t2) = Lx(a) = \frac{\Delta V(t2)}{(DN)^2\frac{\pi}{4}} = \frac{\Delta V_{t1}^{t2}}{(DN)^2\frac{\pi}{4}} = \frac{\int_{t1}^{t2} Q(t)dt}{(DN)^2\frac{\pi}{4}}$$

M    Produkt oder Mischprodukt
N2    Stickstoff
P    stückige Beimengungen (Partikel)

PIC    Druckanzeige und Druckregelung
PIS    Druckanzeige und Druckverknüpfungssteuerung

Q(t)    zeitabhängiger Volumenstrom
S    Startsignal

ST1 erster Dampf
ST2 zweiter Dampf

T Trägerflüssigkeit
V Volumenbereich

$\Delta V(t)$ Verdrängungsvolumen zwischen t1 und t → $\quad \left( \Delta V(t) = \Delta V_{t1}^{t} = \int_{t1}^{t} Q(t)\,dt \right)$

$\Delta V(t2)$ erstes Verdrängungsvolumen zwischen t1 und t2 → $\quad \left( \Delta V(t2) = \Delta V_{t1}^{t2} = \int_{t1}^{t2} Q(t)\,dt \right)$

$\Delta V(2c)$ zweites Verdrängungsvolumen zwischen t1 und t(2c), der Zeit zum Erreichen von 2c →

$$\left( \Delta V(2c) = \Delta V_{t1}^{t(2c)} = \int_{t1}^{t2} Q(t)\,dt \right)$$

W Wasser
Z Zufuhröffnung

a vorbestimmter Abstand
c Fördergeschwindigkeit
n Drehzahl

p(DM) Treibdruck
p1 erster Druck
p2 zweiter Druck

t Zeit (allgemein)
t1 Startzeitpunkt
t2 Umschaltzeitpunkt
dt Zeitintervall
$\Delta t^{*}$ Umschaltzeit

## Patentansprüche

1. Verfahren zur Behandlung eines stückige Beimengungen (P) beinhaltenden Produkts (M) oder aus einer Trägerflüssigkeit (T) und solchen stückigen Beimengungen (P) bestehenden Mischprodukts (M) unter aseptischen Bedingungen,

   • bei dem das Produkt oder Mischprodukt (M) an einem ersten Ort (I) her- und/oder bereitgestellt und an einem zweiten Ort (II) kalt abgefüllt wird;
   • bei dem das Produkt oder Mischprodukt (M) vom ersten zum zweiten Ort (I, II) zwangsweise gefördert wird und dabei wenigstens eine Erhitzung (E), eine Heißhaltung (HH) und eine Kühlung (K) erfährt;
   • bei dem ein den ersten und den zweiten Ort (I, II) fluidgängig verbindender Strömungsweg (2/4) vorgesehen ist, der als ein Hauptströmungsweg (2) mit einer Bypass-Schleife (4) ausgestaltet ist,

   wobei folgende Schritte vorgesehen sind:

   (a) in einer Anlaufphase (A) wird der Strömungsweg (2/4) mit Wasser oder einem adäquaten flüssigen Medium (W) gefüllt und durchströmt;
   (b) das Wasser oder Medium (W) wird dazu mittels einer in der Bypass-Schleife (4) angeordneten Fördereinrichtung (30) gefördert;
   (c) wenigstens die Durchströmung des Hauptströmungsweges (2) erfolgt mit einer produktspezifischen Fördergeschwindigkeit (c), die auf einen konstanten Wert geregelt wird;
   (d) eine Übergangsphase (U) wird eingeleitet durch Umschalten von Wasser oder Medium (W) auf das am ersten Ort (I) bereitgestellte Produkt oder Mischprodukt (M) unter den Bedingungen der Schritte (b) und (c);
   (e) eine Lage einer mit der Fördergeschwindigkeit (c) fortschreitenden Phasengrenzfläche (Lx) zwischen dem Produkt oder Mischprodukt (M) und dem Wasser oder Medium (W) wird fortlaufend ermittelt;

(f) wenn die Phasengrenzfläche (Lx) einen vorbestimmten Abstand (a) von einer Abzweigungsstelle (2c) erreicht hat, an der sich, in Strömungsrichtung gesehen, der Hauptströmungsweg (2) in die Bypass-Schleife (4) verzweigt, erfolgt ein gesteuerter Übergang von der Förderung durch die Fördereinrichtung (30) auf eine zwangsweise Förderung, die durch eine Druckbeaufschlagung mit einem pneumatischen Druckmittel (DM) auf das am ersten Ort (I) bereitgestellten Produkt oder Mischprodukt (M) bewirkt wird und die sich nunmehr ausschließlich und nachhaltig über den Hauptströmungsweg (2) vollzieht;

(g) das Produkt oder Mischprodukt (M) schiebt mit der in Schritt (c) definierten Fördergeschwindigkeit (c) das Wasser oder Medium (W) über den Hauptströmungsweg (2) an dem zweiten Ort (II) aus;

(h) in einer sich anschließenden Betriebsphase (B) wird die Fördergeschwindigkeit (c) von einem am ersten Ort (I) im Produkt oder Mischprodukt (M) bereitzustellenden ersten Druck (p1) erzeugt, wobei dieser ursächlich durch einen vom ersten Druck (p1) abhängigen, steuerbaren Treibdruck (p(DM)) des pneumatischen Druckmittels (DM) generiert wird.

2. Verfahren nach Anspruch 1,
**dadurch gekennzeichnet,**
**dass** die Fördergeschwindigkeit (c) in Abhängigkeit von den Eigenschaften der stückigen Beimengungen (P) eingestellt wird, wobei unter den Eigenschaften der stückigen Beimengungen (P) die Scherfestigkeit, die Größe und/oder die Zusammensetzung der stückigen Beimengungen (P) verstanden wird.

3. Verfahren nach Anspruch 1 oder 2,
**dadurch gekennzeichnet,**
**dass** die Fördergeschwindigkeit (c) in Abhängigkeit von den Eigenschaften der Trägerflüssigkeit (T) eingestellt wird, wobei unter den Eigenschaften der Trägerflüssigkeit (T) der Volumenstrom, die Viskosität, der Druck, die Temperatur und/oder die Zusammensetzung der Trägerflüssigkeit (T) verstanden wird.

4. Verfahren nach einem der vorhergehenden Ansprüche,
**dadurch gekennzeichnet,**
**dass** die Fördergeschwindigkeit (c) in Abhängigkeit von den physikalischen Randbedingungen, denen das Verfahren unterworfen ist, eingestellt wird, wobei unter den physikalischen Randbedingungen des Verfahrens prozessbedingte Vorgabeparameter des Verfahrens wie Druck und Temperatur verstanden wird.

5. Verfahren nach einem der vorhergehenden Ansprüche,
**dadurch gekennzeichnet,**
**dass** die Fördergeschwindigkeit (c) mittels einer vor oder bei Inbetriebnahme des Verfahrens erstellten und hinterlegten Kalibrierfunktion eingestellt wird.

6. Verfahren nach einem der vorhergehenden Ansprüche,
**dadurch gekennzeichnet,**
**dass** sich der vorbestimmte Abstand (a) aus der Fördergeschwindigkeit (c) und aus einer Umschaltzeit ($\Delta t^*$) ergibt, die benötigt wird, um einerseits die Durchströmung der Bypass-Schleife (4) zu unterbrechen und um andererseits die Durchströmung des Hauptströmungsweges (2) im Bereich der Bypass-Schleife (4) durchgängig sicherzustellen.

7. Verfahren nach einem der vorhergehenden Ansprüche,
**dadurch gekennzeichnet,**
**dass** die Förderung mittels der Fördereinrichtung (30) durch den ersten Druck (p1) unterstützt wird.

8. Verfahren nach Anspruch 7,
**dadurch gekennzeichnet,**
**dass** der erste Druck (p1) bis auf einen in der Betriebsphase (B) erforderlichen Enddruck erhöht wird.

9. Verfahren nach einem der vorhergehenden Ansprüche,
**dadurch gekennzeichnet,**
**dass** das Produkt oder Mischprodukt (M) am ersten Ort (I) in mehr als einem Volumenbereich (V), die jeweils räumlich und stoffdicht voneinander abgegrenzt sind, her- und/oder bereitgestellt wird.

10. Verfahren nach Anspruch 9,
**dadurch gekennzeichnet,**

**dass** zwei Volumenbereiche (V) vorgesehen sind, die im Wechsel betrieben werden.

11. Verfahren nach Anspruch 9,
**dadurch gekennzeichnet,**
**dass** drei Volumenbereiche (V) vorgesehen sind, die nacheinander und in zyklischer Abfolge betrieben werden, wobei während des Betriebs des zweiten Volumenbereichs (V) das Druckmittel (DM) aus dem entleerten ersten Volumenbereich (V) in dem dem zweiten Volumenbereich (V) nachfolgenden dritten Volumenbereich (V) wenigstens teilweise wiederverwendet wird.

12. Verfahren nach einem der vorhergehenden Ansprüche,
**dadurch gekennzeichnet,**
**dass** wenigstens die Strömung im Hauptströmungsweg (2) keine unstetigen Umlenkungen erfährt und notwendige Umlenkungen mit einer stetigen Krümmung durchgeführt werden, bei der das Verhältnis zwischen einem auf eine Mittelachse der Strömung bezogenen mittleren Krümmungsradius und einer quer zur Strömungsrichtung gemessenen mittleren Erstreckungsrichtung der Strömung einen Wert von 3 bis 5 aufweist.

13. UHT-Anlage (1000) zur Behandlung eines stückige Beimengungen (P) beinhaltenden Produkts (M) oder aus einer Trägerflüssigkeit (T) und solchen stückigen Beimengungen (P) bestehenden Mischprodukts (M) unter aseptischen Bedingungen,

• mit wenigstens einem Anmischbehälter (10; 10.1, 10.2, 10.3) an einem ersten Ort (I), in dessen Kopfraum eine Druckmittelleitung (6; 6.1, 6.2, 6.3) für ein Druckmittel (DM) einmündet;
• einem Steriltank (50) und einer aus diesem gespeisten Fülleinrichtung (60) zur Befüllung von Behältnissen (70) an einem zweiten Ort (II);
• mit einem Hauptströmungsweg (2), der einerseits über eine Ablaufleitung (2.1; 2.1.1, 2.1.2, 2.1.3) mit dem wenigstens einen Anmischbehälter (10; 10.1, 10.2, 10.3) verbunden ist und der andererseits in den Steriltank (50) einmündet;
• mit einer an einer Abzweigungsstelle (2c) aus dem Hauptströmungsweg (2) abzweigenden und einer stromabwärts in den Hauptströmungsweg (2) an einer Vereinigungsstelle (2d) einmündenden Bypass-Schleife (4);
• mit einer in der Bypass-Schleife (4) angeordneten Fördereinrichtung (30), der eine Drehzahlregelungseinrichtung (120) zugeordnet ist;
• mit wenigstens einem stromabwärts der Vereinigungsstelle (2d) in dem Hauptströmungsweg (2) angeordneten Erhitzer (40, 42), einem Heißhalter (44; 44.1, 44.2) und einem Kühler (46, 48);
• mit einer der Ablaufleitung (2.1; 2.1.1, 2.1.2, 2.1.3) zugeordneten vorgeordneten Druckregelungseinrichtung (80; 80.1, 80.2, 80.3);
• mit einer der Druckmittelleitung (6; 6.1, 6.2, 6.3) zugeordneten und mit einem Drucksteuerungsventil (130; 130.1, 130.2, 130.3) zusammenwirkenden Drucksteuerungseinrichtung (90; 90.1, 90.2, 90.3), die mit der vorgeordneten Druckregelungseinrichtung (80; 80.1, 80.2, 80.3) steuerungstechnisch verknüpft ist;
• mit einer dem Hauptströmungsweg (2) stromabwärts hinter der Vereinigungsstelle (2d) zugeordneten nachgeordneten Druckregelungseinrichtung (100);
• mit einer dem Hauptströmungsweg (2) stromabwärts hinter der Vereinigungsstelle (2d) zugeordneten Durchflussregelungseinrichtung (110), die mit der Drehzahlregelungseinrichtung (120) zusammenwirkt, und
• mit einer Steuereinrichtung (200), die im Zusammenwirken mit der vorgeordneten (80; 80.1, 80.2, 80.3) und der nachgeordneten Druckregelungseinrichtung (100), der Drucksteuerungseinrichtung (90; 90.1, 90.2, 90.3), dem Drucksteuerungsventil (130; 130.1, 130.2, 130.3), der Durchflussregelungseinrichtung (110) und der Drehzahlregelungseinrichtung (120) eine produktspezifische Fördergeschwindigkeit (c) wenigstens in dem Hauptströmungsweg (2) einstellt.

14. UHT-Anlage (1000) nach Anspruch 13,
**dadurch gekennzeichnet,**
**dass** der Hauptströmungsweg (2) und die Bypass-Schleife (4) jeweils als Monorohr ausgebildet sind.

15. UHT-Anlage (1000) nach Anspruch 13 oder 14,
**dadurch gekennzeichnet,**
**dass** der Hauptströmungsweg (2) und die Bypass-Schleife (4) jeweils auf ihrer gesamten Länge durchgängig einen konstanten Durchtrittsquerschnitt aufweisen.

16. UHT-Anlage (1000) nach Anspruch 15,

**dadurch gekennzeichnet,**
**dass** die Durchtrittsquerschnitte des Hauptströmungswegs (2) und der Bypass-Schleife (4) gleich sind.

**17.** UHT-Anlage (1000) nach einem der Ansprüche 13 bis 16,
**dadurch gekennzeichnet,**
**dass** der Hauptströmungsweg (2) und die Bypass-Schleife (4) jeweils auf ihrer gesamten Länge produktschonende Umlenkradien aufweisen, wobei das Verhältnis aus mittlerem Krümmungsradius und einer quer zur Strömungsrichtung orientierten Abmessung des Hauptströmungswegs (2) oder der Bypass-Schleife (4) einen Wert zwischen 3 und 5 aufweist.

**18.** UHT-Anlage (1000) nach einem der Ansprüche 13 bis 17,
**dadurch gekennzeichnet,**
**dass** die Fördereinrichtung (30) als rotierende Verdrängerpumpe ausgebildet ist.

**19.** UHT-Anlage (1000) nach einem der Ansprüche 13 bis 18,
**dadurch gekennzeichnet,**
**dass** der Hauptströmungsweg (2) zwischen dem wenigstens einen Anmischbehälter (10; 10.1, 10.2, 10.3) und der Abzweigungsstelle (2c) wahlweise über einen Vorlaufbehälter (20) geführt ist.

**Claims**

**1.** A method for treating a product (M) containing additional ingredients (P) in piece form or a mixed product (M) consisting of a carrier fluid (T) and such additional ingredients (P) in piece form under aseptic conditions,

• in which the product or mixed product (M) is produced and/or provided at a first location (I) and is filled cold at a second location (II);
• in which the product or mixed product (M) is conveyed in a forced manner from the first to the second location (I, II) and hereby experiences at least one heating (E), a heat retention (HH), and a cooling (K);
• in which a flow path (2/4) connecting the first and the second locations (I, II) in a fluid-conducting manner is provided, which flow path is designed as a main flow path (2) with a bypass loop (4),

wherein the following steps are provided:

(a) in an initial phase (A), water or an adequate liquid medium (W) is filled into and flows through the flow path (2/4);
(b) the water or medium (W) is conveyed for this purpose by means of a conveying apparatus (30) arranged in the bypass loop (4);
(c) at least the flow through the main flow path (2) occurs at a product-specific conveying speed (c) which is regulated at a constant value;
(d) a transition phase (U) is initiated by switching from water or medium (W) to the product or mixed product (M) provided at the first location (I) under the conditions of steps (b) and (c);
(e) a position of a phase boundary (Lx), advancing at the conveying speed (c), between the product or mixed product (M) and the water or medium (W) is continuously determined;
(f) when the phase boundary (Lx) has reached a predetermined distance (a) from a branching point (2c) at which, viewed in the flow direction, the main flow path (2) branches into the bypass loop (4), a controlled transition occurs from the conveyance by the conveying apparatus (30) to a forced conveyance which is effected by an application of pressure with a pneumatic pressure means (DM) on the product or mixed product (M) provided at the first location (I) and which now takes place exclusively and sustainably via the main flow path (2);
(g) the product or mixed product (M) pushes the water or medium (W) out at the second location (II) via the main flow path (2) at the conveying speed (c) defined in step (c);
(h) in a subsequent operation phase (B), the conveying speed (c) is generated by a first pressure (p1) to be provided at the first location (I) in the product or mixed product (M), wherein such pressure is causally generated by a controllable propellent pressure (p(DM)) of the pneumatic pressure means (DM) which is dependent on the first pressure (p1).

**2.** The method according to claim 1,
**characterized in that**
the conveying speed (c) is adjusted depending on the properties of the additional ingredients (P) in piece form, wherein the properties of the additional ingredients (P) in piece form are understood to mean the shear strength, the size, and/or the composition of the additional ingredients (P) in piece form.

3. The method according to claim 1 or 2,
**characterized in that**
the conveying speed (c) is adjusted depending on the properties of the carrier fluid (T), wherein the properties of the carrier fluid (T) are understood to mean the volume flow, the viscosity, the pressure, the temperature, and/or the composition of the carrier fluid (T).

4. The method according to one of the preceding claims,
**characterized in that**
the conveying speed (c) is adjusted depending on the physical constraints to which the method is subjected, wherein the physical constraints of the method are understood to mean process-related default parameters of the method such as pressure and temperature.

5. The method according to one of the preceding claims,
**characterized in that**
the conveying speed (c) is adjusted by means of a calibration function created and stored before or during startup of the method.

6. The method according to one of the preceding claims,
**characterized in that**
the predetermined distance (a) results from the conveying speed (c) and from a switching time ($\Delta t^*$) that is required to interrupt the flow through the bypass loop (4) on the one hand and to consistently ensure the flow through the main flow path (2) in the region of the bypass loop (4) on the other hand.

7. The method according to one of the preceding claims,
**characterized in that**
the conveyance by means of the conveying apparatus (30) is supported by the first pressure (p1).

8. The method according to claim 7,
**characterized in that**
the first pressure (p1) is increased up to an end pressure necessary in the operation phase (B).

9. The method according to one of the preceding claims,
**characterized in that**
the product or mixed product (M) is produced and/or provided at the first location (I) in more than one volume region (V) which are each delimited from each other spatially and in a material-tight manner.

10. The method according to claim 9,
**characterized in that**
two volume regions (V) that are operated in alternation are provided.

11. The method according to claim 9,
**characterized in that**
three volume regions (V) that are operated one after the other and in cyclical sequence are provided, wherein during operation of the second volume region (V), the pressure means (DM) from the emptied first volume region (V) is at least partially reused in the third volume region (V) following the second volume region (V).

12. The method according to one of the preceding claims,
**characterized in that**
at least the flow in the main flow path (2) does not experience unsteady deflections, and necessary deflections are performed with a steady curvature in which the ratio between an average curvature radius, with reference to a central axis of the flow, and an average extension direction of the flow measured transversely to the flow direction has a value of 3 to 5.

13. A UHT installation (1000) for treating a product (M) containing additional ingredients (P) in piece form or mixed product (M) consisting of a carrier fluid (T) and such additional ingredients (P) in piece form under aseptic conditions,

• with at least one mixing container (10; 10.1, 10.2, 10.3) at a first location (I), into the head space of which a pressure means line (6; 6.1, 6.2, 6.3) for a pressure means (DM) discharges;
• a sterile tank (50) and a filling apparatus (60) fed from this tank for filling receptacles (70) at a second location (II);
• with a main flow path (2) which on one side is connected to the at least one mixing container (10; 10.1, 10.2, 10.3) via a drain line (2.1; 2.1.1, 2.1.2, 2.1.3) and on the other side discharges into the sterile tank (50);
• with a bypass loop (4) that branches off from the main flow path (2) at a branching point (2c) and discharges downstream into the main flow path (2) at a joining point (2d);
• with a conveying apparatus (30) arranged in the bypass loop (4), which conveying apparatus is assigned a rotational speed regulation apparatus (120);
• with at least one heater (40, 42) arranged in the main flow path (2) downstream of the joining point (2d), a heat retainer (44; 44.1, 44.2), and a cooler (46, 48);
• with an upstream pressure regulation apparatus (80; 80.1, 80.2, 80.3) assigned to the drain line (2.1; 2.1.1, 2.1.2, 2.1.3);
• with a pressure control apparatus (90; 90.1, 90.2, 90.3) assigned to the pressure means line (6; 6.1, 6.2, 6.3) and interacting with a pressure control valve (130; 130.1, 130.2, 130.3), which pressure control apparatus is linked via control technology with the upstream pressure regulation apparatus (80; 80.1, 80.2, 80.3);
• with a downstream pressure regulation apparatus (100) assigned to the main flow path (2) downstream of the joining point (2d);
• with a flow regulation apparatus (110) assigned to the main flow path (2) downstream of the joining point (2d), which flow regulation apparatus interacts with the rotational speed regulation apparatus (120), and
• with a control apparatus (200) that adjusts a product-specific conveying speed (c) at least in the main flow path (2) in interaction with the upstream (80; 80.1, 80.2, 80.3) and the downstream pressure regulation apparatuses (100), the pressure control apparatus (90; 90.1, 90.2, 90.3), the pressure control valve (130; 130.1, 130.2, 130.3), the flow regulation apparatus (110), and the rotational speed regulation apparatus (120).

**14.** The UHT installation (1000) according to claim 13,
**characterized in that**
the main flow path (2) and the bypass loop (4) are each designed as a monotube.

**15.** The UHT installation (1000) according to claim 13 or 14,
**characterized in that**
the main flow path (2) and the bypass loop (4) each consistently have a constant pass-through cross section over their entire length.

**16.** The UHT installation (1000) according to claim 15,
**characterized in that**
the pass-through cross section of the main flow path (2) and of the bypass loop (4) are the same.

**17.** The UHT installation (1000) according to one of claims 13 to 16,
**characterized in that**
the main flow path (2) and the bypass loop (4) each have product-protecting deflection radii over their entire length, wherein the ratio of the average curvature radius and a dimension of the main flow path (2) or of the bypass loop (4) oriented transversely to the flow direction has a value between 3 and 5.

**18.** The UHT installation (1000) according to one of claims 13 to 17,
**characterized in that**
the conveying apparatus (30) is designed as a rotating positive displacement pump.

**19.** The UHT installation (1000) according to one of claims 13 to 18,
**characterized in that**
the main flow path (2) is optionally guided via a supply tank (20) between the at least one mixing container (10; 10.1, 10.2, 10.3) and the branching point (2c).

**Revendications**

**1.** Procédé prévu pour traiter un produit (M) contenant des additifs en morceaux (P) ou un produit de mélange (M) constitué d'un liquide porteur (T) et de tels additifs en morceaux (P) dans des conditions aseptiques,

• lors duquel le produit ou le produit de mélange (M) est fabriqué et / ou fourni à un premier endroit (I), puis rempli à froid à un second endroit (II) ;

• lors duquel le produit ou le produit de mélange (M) est transporté de manière forcée du premier au second endroit (I, II) et subi alors au moins un échauffement (E), un maintien au chaud (HH) et un refroidissement (K);

• lors duquel il est prévu une voie d'écoulement (2/4) reliant fluidiquement le premier et le second endroit (I, II), qui est conçue sous la forme d'une voie d'écoulement principale (2) avec une boucle de dérivation (4),

dans lequel les étapes suivantes sont prévues :

a) la voie d'écoulement (2/4) est remplie et traversée par de l'eau ou un milieu liquide adéquat (W) dans une phase de démarrage (A) ;

b) l'eau ou le milieu (W) est acheminé/e à cette fin au moyen d'un dispositif de convoyage (30) disposé dans la boucle de dérivation (4) ;

c) la traversée de la voie d'écoulement principale (2) se fait au moins à une vitesse de convoyage (c) spécifique du produit, qui est réglée sur une valeur constante ;

d) une phase de transition (U) est engagée moyennant la commutation de l'eau ou du milieu (W) sur le produit ou le produit de mélange (M) fourni au premier endroit (I) dans les conditions des étapes (b) et (c) ;

e) une situation d'une interphase (Lx) progressant à la vitesse de convoyage (c) est déterminée continuellement entre le produit ou le produit de mélange (M) et l'eau ou le milieu (W) ;

f) lorsque l'interphase (Lx) a atteint une distance prédéfinie (a) par rapport à un embranchement (2c), au niveau duquel la voie d'écoulement principale (2), considérée dans le sens de l'écoulement, bifurque dans la boucle de dérivation (4), une transition contrôlée se déroule du transport à travers le dispositif de convoyage (30) vers un cheminement forcé, qui est induit par l'application d'une pression avec un fluide pneumatique (DM) sur le produit ou le produit de mélange (M) fourni au premier endroit (I) et s'opère alors exclusivement et durablement par la voie d'écoulement principale (2) ;

g) le produit ou le produit de mélange (M) expulse l'eau ou le milieu (W) à la vitesse de convoyage (c) définie à l'étape (c) par la voie d'écoulement principale (2) jusqu'au second endroit (II) ;

h) la vitesse de convoyage (c) d'une première pression (p1) à fournir dans le produit ou le produit de mélange (M) au premier endroit (I) est générée dans une phase d'exploitation (B) consécutive, sachant que cette pression est produite à l'origine par une pression d'entraînement (p(DM)) du fluide pneumatique (DM), contrôlable et dépendant de la première pression (p1).

2. Procédé selon la revendication 1,
**caractérisé en ce**
**que** la vitesse de convoyage (c) est réglée en fonction des propriétés des additifs en morceaux (P), dans lequel les propriétés des additifs en morceaux (P) recouvrent la résistance au cisaillement, la taille et / ou la composition des additifs en morceaux (P).

3. Procédé selon la revendication 1 ou 2,
**caractérisé en ce**
**que** la vitesse de convoyage (c) est réglée en fonction des propriétés du liquide porteur (T), dans lequel les propriétés du liquide porteur (T) recouvrent le débit volumique, la viscosité, la pression, la température et / ou la composition du liquide porteur (T).

4. Procédé selon l'une des revendications précédentes,
**caractérisé en ce**
**que** la vitesse de convoyage (c) est réglée en fonction des conditions aux limites physiques, auxquelles le procédé est soumis, dans lequel des conditions aux limites physiques du procédé recouvrent les paramètres prédéterminés liés au processus du procédé comme la pression et la température.

5. Procédé selon l'une des revendications précédentes,
**caractérisé en ce**
**que** la vitesse de convoyage (c) est réglée au moyen d'une fonction de calibrage établie et enregistrée avant ou lors de la mise en exploitation du procédé.

6. Procédé selon l'une des revendications précédentes,
**caractérisé en ce**
**que** la distance prédéfinie (a) résulte de la vitesse de convoyage (c) et d'un temps de commutation (Δt*), qui est requis pour interrompre la traversée de la boucle de dérivation (4) d'une part et pour assurer continuellement la traversée de la voie d'écoulement principale (2) dans la zone de la boucle de dérivation (4) d'autre part.

7. Procédé selon l'une des revendications précédentes,
**caractérisé en ce**
**que** le transport au moyen d'un dispositif de convoyage (30) est activé sous l'effet de la première pression (p1).

8. Procédé selon la revendication 7,
**caractérisé en ce**
**que** la première pression (p1) est accrue jusqu'à une pression finale indispensable dans la phase d'exploitation (B).

9. Procédé selon l'une des revendications précédentes,
**caractérisé en ce**
**que** le produit ou le produit de mélange (M) est fabriqué et / ou fourni au premier endroit (I) dans plus d'une zone de volume (V), ces zones étant respectivement délimitées dans l'espace et l'une par rapport à l'autre de manière étanche à la matière.

10. Procédé selon la revendication 9,
**caractérisé en ce**
**que** deux zones de volume (V) sont prévues, qui sont exploitées en alternance.

11. Procédé selon la revendication 9,
**caractérisé en ce**
**que** trois zones de volume (V) sont prévues, qui sont exploitées l'une après l'autre et selon un déroulement cyclique, dans lequel le fluide pneumatique (DM) est au moins en partie réutilisé à la sortie de la première zone de volume (V) vidangée dans la troisième zone de volume (V) faisant suite à la deuxième zone de volume (V) durant l'exploitation de la deuxième zone de volume (V).

12. Procédé selon l'une des revendications précédentes,
**caractérisé en ce**
**qu'**au moins l'écoulement dans la voie d'écoulement principale (2) ne subit aucune déviation intermittente et que les déviations nécessaires sont effectuées avec une courbure constante, pour laquelle le rapport entre un rayon de courbure moyen, rapporté à un axe central de l'écoulement et une direction d'extension moyenne de l'écoulement, mesurée transversalement par rapport au sens d'écoulement présente une valeur de 3 à 5.

13. Installation UHT (1000) prévue pour traiter un produit (M) contenant des additifs en morceaux (P) ou un produit de mélange (M) constitué d'un liquide porteur (T) et de tels additifs en morceaux (P) dans des conditions aseptiques,

- avec au moins une cuve de malaxage (10; 10.1, 10.2, 10.3) à un premier endroit (I), dans l'espace libre de laquelle débouche une conduite (6; 6.1, 6.2, 6.3) d'un fluide pneumatique (DM) ;
- un réservoir stérile (50) et un dispositif de remplissage (60) alimenté à partir de celui-ci pour remplir des récipients (70) à un second endroit (II) ;
- avec une voie d'écoulement principale (2), qui est reliée au moins à ladite cuve de malaxage (10; 10.1, 10.2, 10.3) par une conduite d'évacuation (2.1 ; 2.1.1, 2.1.2, 2.1.3) d'une part et qui débouche dans le réservoir stérile (50) d'autre part ;
- avec une boucle de dérivation (4) bifurquant de la voie d'écoulement principale (2) à un embranchement (2c) et une autre débouchant en aval dans la voie d'écoulement principale (2) à un point de convergence (2d) ;
- avec un dispositif de convoyage (30) disposé dans la boucle de dérivation (4), auquel est associé un dispositif de régulation de vitesse de rotation (120) ;
- avec au moins un réchauffeur (40, 42) disposé dans la voie d'écoulement principale (2) en aval du point de convergence (2d), un appareil de maintien au chaud (44; 44.1, 44.2) et un refroidisseur (46, 48) ;
- avec un dispositif de régulation de pression (80; 80.1, 80.2, 80.3) situé en amont et associé à la conduite d'évacuation (2.1 ; 2.1.1, 2.1.2, 2.1.3) ;
- avec un dispositif de commande de pression (90 ; 90.1, 90.2, 90.3) associé à la conduite d'un fluide pneumatique (6 ; 6.1, 6.2, 6.3) et interagissant avec une soupape de commande de pression (130 ; 130.1, 130.2, 130.3), qui est combiné par un système de commande au dispositif de régulation de pression (80 ; 80.1, 80.2, 80.3) situé en amont ;
- avec un dispositif de régulation de pression (100) situé en aval, associé à la voie d'écoulement principale (2) en aval derrière le point de convergence (2d) ;

• avec un dispositif de régulation de débit (110) associé à la voie d'écoulement principale (2) en aval derrière le point de convergence (2d), qui interagit avec le dispositif de régulation de vitesse de rotation (120), et

• avec un dispositif de commande (200), qui règle une vitesse de convoyage (c) spécifique du produit au moins dans la voie d'écoulement principale (2) en interaction avec le dispositif de régulation de pression situé en amont (80; 80.1, 80.2, 80.3) et situé en aval (100), avec le dispositif de commande de pression (90 ; 90.1, 90.2, 90.3), avec la soupape de commande de pression (130 ; 130.1, 130.2, 130.3), avec le dispositif de régulation de débit (110) et avec le dispositif de régulation de vitesse de rotation (120).

**14.** Installation UHT (1000) selon la revendication 13,
**caractérisé en ce**
**que** la voie d'écoulement principale (2) et la boucle de dérivation (4) sont respectivement constituées d'un monotube.

**15.** Installation UHT (1000) selon la revendication 13 ou 14,
**caractérisé en ce**
**que** la voie d'écoulement principale (2) et la boucle de dérivation (4) présentent respectivement en continu une section de passage constante sur toute leur longueur.

**16.** Installation UHT (1000) selon la revendication 15,
**caractérisé en ce**
**que** les sections de passage de la voie d'écoulement principale (2) et de la boucle de dérivation (4) sont identiques.

**17.** Installation UHT (1000) selon l'une des revendications 13 à 16,
**caractérisé en ce**
**que** la voie d'écoulement principale (2) et la boucle de dérivation (4) présentent respectivement des rayons de déviation ménageant le produit sur toute leur longueur, dans laquelle le rapport découlant du rayon de courbure moyen et d'une dimension orientée transversalement par rapport au sens d'écoulement de la voie d'écoulement principale (2) ou de la boucle de dérivation (4) présente une valeur comprise entre 3 et 5.

**18.** Installation UHT (1000) selon l'une des revendications 13 à 17,
**caractérisé en ce**
**que** le dispositif de convoyage (30) est conçu sous la forme d'une pompe volumétrique rotative.

**19.** Installation UHT (1000) selon l'une des revendications 13 à 18,
**caractérisé en ce**
**que** la voie d'écoulement principale (2) est dirigée entre ladite cuve de malaxage (10; 10.1, 10.2, 10.3) au moins et l'embranchement (2c), en passant au choix par un réservoir d'alimentation (20).

Figur 1

**1000**

**Figur 2**

Figur 3a

Figur 3b

**Figur 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2012143174 A